# EUROPÄISCHE PATENTSCHRIFT

(11) **EP 1 610 261 B1**
(45) Veröffentlichungstag und Bekanntmachung des Hinweises auf die Patenterteilung: **27.03.2013**
(21) Anmeldenummer: 05012874.3
(22) Anmeldetag: 15.06.2005
(51) Int. Cl.: G06K 19/077

(54) **Chipmodul für einen tragbaren Datenträger**
Chipmodule for a portable data carrier
Module pour carte à puce

(30) Priorität: 25.06.2004 DE 102004030749
(43) Veröffentlichungstag der Anmeldung: 28.12.2005
(73) Patentinhaber: Giesecke & Devrient GmbH, 81677 München (DE)
(72) Erfinder: Schröder, Sönke, 81541 München (DE); Tarantino, Thomas, 83410 Laufen (DE); Jansen, Jens, 81825 München (DE)

(56) Entgegenhaltungen:
- WO-A-02/089050
- FR-A- 2 634 095
- US-A1- 2001 011 962

## Beschreibung

Die Erfindung betrifft ein Chipmodul für einen tragbaren Datenträger. Weiterhin betrifft die Erfindung einen mit einem derartigen Chipmodul ausgestatteten tragbaren Datenträger.

Kartenförmige Datenträger, insbesondere Chipkarten werden in vielen Bereichen eingesetzt, beispielsweise als Ausweisdokumente, zum Nachweis einer Zugangsberechtigung zu einem Mobilfunknetz oder im öffentlichen Nahverkehr sowie zur Durchführung von Transaktionen des bargeldlosen Zahlungsverkehrs. Eine Chipkarte weist einen Kartenkörper und einen in den Kartenkörper eingebetteten integrierten Schaltkreis auf. Um eine effiziente Herstellung der Chipkarte zu ermöglichen, wird der integrierte Schaltkreis bei einer Vielzahl von Herstellungsverfahren zunächst in ein Chipmodul verpackt und anschließend das Chipmodul in den Kartenkörper eingebaut. Insbesondere wird das Chipmodul in eine Aussparung des Kartenkörpers eingeklebt.

Eine Kommunikation mit dem integrierten Schaltkreis kann über ein Kontaktfeld der Chipkarte abgewickelt werden, das hierzu von einer Kontaktiereinheit berührend kontaktiert wird. Das Kontaktfeld ist in der Regel Bestandteil des Chipmoduls. Alternativ oder zusätzlich zur Kommunikation über das Kontaktfeld kann eine kontaktlose Kommunikation vorgesehen sein. Hierzu kann der Kartenkörper eine Antenne aufweisen, die beim Einbau des Chipmoduls elektrisch leitend mit dem integrierten Schaltkreis verbunden wird. Außerdem können beim Einbau des Chipmoduls in den Kartenkörper elektrisch leitende Verbindungen zu weiteren elektrischen Komponenten des Kartenkörpers hergestellt werden. Dies ist allerdings insofern schwierig, da durch die dafür erforderlichen Anschlüsse die Klebefläche zwischen dem Chipmodul und dem Kartenkörper reduziert wird und somit die Zahl bzw. Größe der Anschlüsse wegen des erforderlichen Verbunds zwischen dem Chipmodul und dem Kartenkörper sehr limitiert ist.

Beispielsweise aus der WO 02/089050 A1 ist ein Chipmodul für einen tragbaren Datenträger bekannt, bei dem ein integrierter Schaltkreis auf einem Träger angeordnet ist. Im seitlichen Abstand zum Schaltkreis ist ein Anschlussfeld zum Anschließen einer weiteren Komponente ausgebildet. Das Modul weist weiterhin eine Klebefläche an der den Leiterbahnen gegenüberliegenden Grenzfläche des Zwischenträgers mit dem Datenträger auf.

Der Erfindung liegt die Aufgabe zugrunde, ein Chipmodul für einen tragbaren Datenträger so auszubilden, dass ausreichend Anschlussmöglichkeiten für elektrische Komponenten bestehen und zudem ein stabiler Verbund zwischen dem Chipmodul und dem Kartenkörper möglich ist.

Diese Aufgabe wird durch ein Chipmodul mit der Merkmalskombination des Anspruchs 1 gelöst.

Das erfindungsgemäße Chipmodul für einen tragbaren Datenträger weist einen integrierten Schaltkreis auf, der auf einem Träger angeordnet ist. Die Besonderheit des erfindungsgemäßen Chipmoduls besteht darin, dass auf dem Träger in einem seitlichen Abstand zum integrierten Schaltkreis ein Anschlussfeld mit mehreren Anschlüssen zum Anschließen wenigstens einer elektrischen Komponente des tragbaren Datenträgers ausgebildet ist, wobei das Anschlussfeld außerhalb eines Klebebereichs angeordnet ist und wobei der Klebebereich in einer Aussparung des Datenträgers angeordnet ist. Dabei umgibt der Klebebereich den integrierten Schaltkreis oder einen Vergusskörper, in den der integrierte Schaltkreis eingebettet ist und dient der Fixierung am tragbaren Datenträger.

Die Erfindung hat den Vorteil, dass auf dem Chipmodul ausreichend Anschlussmöglichkeiten für elektrische Komponenten bestehen und zudem ein zuverlässiger Verbund zwischen dem Chipmodul und dem Kartenkörper möglich ist. Ein weiterer Vorteil besteht darin, dass das Anschlussfeld in einem Bereich angeordnet ist, in dem nach dem Einbau des Chipmoduls in den Kartenkörper keine allzu hohen mechanischen Belastungen auftreten und dadurch die mittels des Anschlussfeldes ausgebildeten elektrischen Verbindungen sehr stabil sind.

In einem bevorzugten Ausführungsbeispiel des erfindungsgemäßen Chipmoduls ist der integrierte Schaltkreis in einen Vergusskörper eingebettet und das Anschlussfeld außerhalb des Vergusskörpers, vorzugsweise in einem seitlichen Abstand von mindestens 2mm zum Vergusskörper, angeordnet.

Besonders vorteilhaft ist es, wenn das Anschlussfeld außerhalb eines Klebebereichs angeordnet ist, der den integrierten Schaltkreis oder den Vergusskörper umgibt und der Fixierung am tragbaren Datenträger dient. Auf diese Weise kann eine Beeinträchtigung des Verbunds zwischen dem Chipmodul und dem Kartenkörper durch das Anschlussfeld ausgeschlossen werden.

Wenigstens einige der Anschlüsse können mit dem integrierten Schaltkreis elektrisch leitend verbunden sein. Weiterhin kann vorgesehen sein, dass wenigstens einige der Anschlüsse auf derselben Hauptfläche des Trägers angeordnet sind, auf der auch der integrierte Schaltkreis angeordnet ist.

Im Bereich des Anschlussfeldes kann wenigstens ein kapazitives und/oder wenigstens ein induktives Element ausgebildet sein. Ebenso ist es möglich, dass im Bereich des Anschlussfeldes wenigstens eine Schalteinrichtung ausgebildet ist. Weiterhin kann im Bereich des Anschlussfeldes wenigstens ein elektronisches Bauteil, vorzugsweise in SMD-Technik, angeordnet sein. Auf diese Weise kann das Anschlussfeld sehr vielfältig genutzt werden.

Der integrierte Schaltkreis kann mit einem standardisierten Kontaktfeld für eine externe Kontaktierung elektrisch leitend verbunden sein. Dabei kann das Anschlussfeld seitlich versetzt zum Kontaktfeld für die externe Kontaktierung angeordnet sein.

Der erfindungsgemäße tragbare Datenträger weist einen Kartenkörper mit wenigstens einer elektrischen Komponente auf. Weiterhin ist ein Chipmodul mit einem auf einem Träger angeordneten integrierten Schaltkreis vorgesehen, das ganz oder teilweise in den Kartenkörper eingebettet ist und elektrisch leitend mit der elektrischen Komponente des Kartenkörpers verbunden ist. Die Besonderheit des erfindungsgemäßen tragbaren Datenträgers besteht darin, dass die elektrisch leitende Verbindung zwischen dem Chipmodul und der elektrischen Komponente des Kartenkörpers mittels eines Anschlussfeldes des Chipmoduls realisiert ist, das in einem seitlichen Abstand zum integrierten Schaltkreis auf dem Träger ausgebildet ist und mehrere Anschlüsse aufweist.

Besonders vorteilhaft ist es, wenn wenigstens einige Anschlüsse des Anschlussfeldes mittels eines elektrisch leitenden Klebers, der vorzugsweise eine anisotrope Leitfähigkeit aufweist, elektrisch leitend mit dafür vorgesehenen Strukturen des Kartenkörpers verbunden sind. Eine derart ausgebildete elektrisch leitende Verbindung lässt sich mit einem vergleichsweise geringen Aufwand herstellen.

In einer Weiterbildung des erfindungsgemäßen tragbaren Datenträgers ist wenigstens ein Anschluss des Anschlussfeldes außerhalb des Kartenkörpers zugänglich. Dieser Anschluss kann für eine Kontaktierung durch ein externes Gerät genutzt werden.

Der erfindungsgemäße tragbare Datenträger ist vorzugsweise so ausgebildet, dass die lateralen Abmessungen des Chipmoduls kleiner sind als die lateralen Abmessungen des Kartenkörpers. Das Chipmodul kann in einer vorzugsweise zweistufig ausgebildeten Aussparung des Kartenkörpers angeordnet sein, die zur Umgebung hin offen ist. Dadurch ist gewährleistet, dass für die Herstellung des Chipmoduls und des Kartenkörpers bekannte Herstellungsverfahren eingesetzt werden können.

Die Erfindung wird nachstehend anhand der in der Zeichnung dargestellten Ausführungsbeispiele erläutert.

Es zeigen:
- Fig.: 1 eine Aufsicht auf die Vorderseite eines Ausführungsbeispiels eines erfindungsgemäß ausgebildeten Chipmoduls,
- Fig. 2: eine Aufsicht auf die Rückseite des in Fig. 1 dargestellten Ausführungsbeispiels des erfindungsgemäßen Chipmoduls,
- Fig. 3: eine Schnittdarstellung des in den Fig. 1 und 2 dargestellten Ausführungsbeispiels des erfindungsgemäßen Chipmoduls,
- Fig. 4: eine weitere Aufsicht auf die Rückseite des in den Fig. 1 bis 3 dargestellten Ausführungsbeispiels des erfindungsgemäßen Chipmoduls,
- Fig. 5: eine Schnittdarstellung eines Ausführungsbeispiels der erfindungsgemäßen Chipkarte mit dem in den Fig. 1 bis 4 dargestellten Chipmodul und
- Fig. 6: eine Aufsicht auf die Rückseite eines weiteren Ausführungsbeispiels des erfindungsgemäßen Chipmoduls.

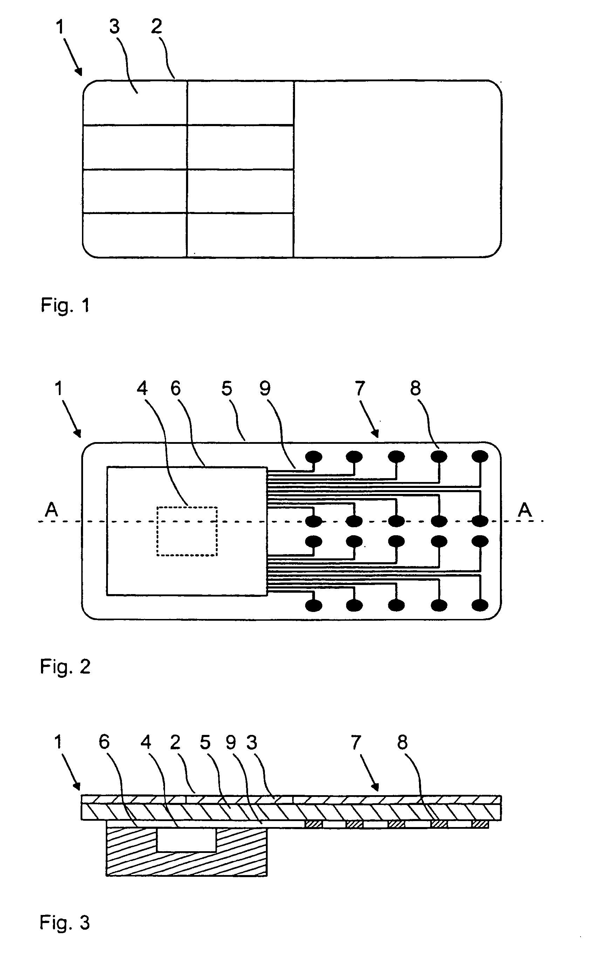

Fig. 1 zeigt eine Aufsicht auf die Vorderseite eines Ausführungsbeispiels eines erfindungsgemäß ausgebildeten Chipmoduls 1. Eine Aufsicht auf die Rückseite des Chipmoduls 1 ist in Fig. 2 dargestellt. Eine zugehörige Schnittdarstellung entlang der in Fig. 2 eingezeichneten Schnittlinie AA zeigt Fig. 3. Dabei handelt es sich lediglich um schematische Darstellungen, die nicht maßstäblich gezeichnet sind. Dies gilt auch für die weiteren Fig.

Das Chipmodul 1 ist für den Einbau in eine Chipkarte vorgesehen und weist auf seiner Vorderseite, die nach dem Einbau des Chipmoduls 1 nach außen gerichtet ist, ein Kontaktfeld 2 auf. Das Kontaktfeld 2 kann gemäß der Norm ISO/IEC 7816 ausgebildet sein und besteht aus einer Reihe von Kontaktflächen 3, die mittels einer nicht figürlich dargestellten Kontaktiereinheit eines externen Geräts berührend kontaktiert werden können.

Auf seiner in Fig. 2 dargestellten Rückseite, die nach dem Einbau in die Chipkarte nach innen gerichtet ist, weist das Chipmodul 1 im Bereich des Kontaktfeldes 2 einen integrierten Schaltkreis 4 auf. Der integrierte Schaltkreis 4 ist auf einer Trägerfolie 5 angeordnet und zum Schutz vor Beschädigung in einen Vergusskörper 6 eingebettet. Das Kontaktfeld 2 ist ebenfalls auf der Trägerfolie 5 angeordnet, allerdings auf der Vorderseite des Chipmoduls 1, und ist beispielsweise durch galvanische Abscheidung hergestellt. Mittels figürlich nicht dargestellter Bond-Drähte oder auf andere Weise sind die Kontaktflächen 3 des Kontaktfeldes 2 elektrisch leitend mit dem integrierten Schaltkreis 4 verbunden. Seitlich neben dem integrierten Schaltkreis 4 und außerhalb des Vergusskörpers 6 ist auf der Trägerfolie 5 ein Anschlussfeld 7 mit mehreren Anschlüssen 8 ausgebildet. Das Anschlussfeld 7 ist in einem Abstand zum Vergusskörper 6 und damit auch zum integrierten Schaltkreis 4 angeordnet. Insbesondere ist das Anschlussfeld 7 soweit vom Vergusskörper 6 entfernt, dass ein für die Verklebung des Chipmoduls 1 vorgesehener Bereich der Trägerfolie 5, der den Vergusskörper 6 umgibt, von den Anschlüssen 8 des Anschlussfeldes 7 ganz oder weitgehend ausgespart bleibt. Der seitliche Abstand des Anschlussfelds 7 von dem Vergusskörper 6 beträgt vorzugsweise mindestens 2 mm. Beim dargestellten Ausführungsbeispiel ist das Anschlussfeld 7 zudem seitlich versetzt zum Kontaktfeld 2 angeordnet und weist ungefähr die gleichen lateralen Abmessungen wie das Kontaktfeld 2 auf, so dass die lateralen Abmessungen des Chipmoduls 1 ungefähr doppelt so groß wie die lateralen Abmessungen des Kontaktfeldes 2 sind. Auch bei weiteren Ausführungsbeispielen des Chipmoduls 1 ist vorzugsweise vorgesehen, die doppelte Größe des Kontaktfeldes 2 nicht oder nicht wesentlich zu überschreiten. Ausgehend von den Anschlüssen 8 erstrecken sich Leiterbahnen 9 in Richtung des Vergusskörpers 6. Die Leiterbahnen 9 sind Teil einer Schaltung des Chipmoduls 1 und können beispielsweise mit dem integrierten Schaltkreis 4 elektrisch leitend verbunden sein.

In einer Weiterbildung des in Fig. 1 bis 3 dargestellten Ausführungsbeispiels des Chipmoduls 1 sind im Bereich des Anschlussfeldes 7 zusätzlich elektronische Bauteile, beispielsweise in SMD-Technik, aufgebracht. SMD steht dabei für Surface Mounting Devices und bedeutet, dass die elektronischen Bauteile in miniaturisierter Form ausgeführt sind und direkt auf die Leiterbahnen 9 des Chipmoduls 1 aufgelötet werden. Im Bereich des Anschlussfeldes kann eine ebenfalls nicht dargestellte Schalteinrichtung ausgebildet sein. Die Schalteinrichtung ist vorzugsweise aussenseitig, also auf der in Fig.1 erkennbaren Seite, angeordnet. Sie kann beispielsweise ein kapazitiver Taster oder Schalter oder aber ein induktiver Schaltkreis sein.

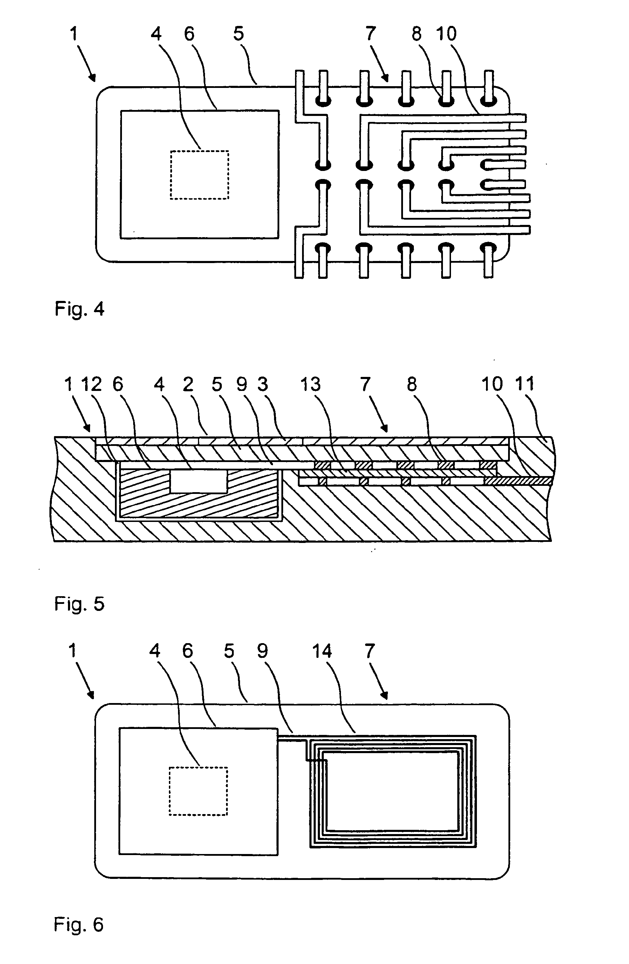

Fig. 4 zeigt eine weitere Aufsicht auf die Rückseite des in den Fig. 1 bis 3 dargestellten Ausführungsbeispiels des erfindungsgemäßen Chipmoduls 1. In der Darstellung der Fig. 4 sind die Leiterbahnen 9 des Chipmoduls 1 weggelassen. Stattdessen sind Leiterbahnen 10 der Chipkarte eingezeichnet, die im eingebauten Zustand des Chipmoduls 1 in der dargestellten Weise relativ zum Anschlussfeld 7 des Chipmoduls 1 angeordnet sind. Dabei befindet sich jeweils ein Ende der dargestellten Leiterbahnen 10 im Bereich je eines Anschlusses 8, so dass die Leiterbahnen 10 mit den Anschlüssen 8 elektrisch leitend verbunden werden können. Wie anhand von Fig. 5 noch erläutert wird, sind die Leiterbahnen 10 der Chipkarte allerdings nicht auf der Trägerfolie 5 des Chipmoduls 1 ausgebildet, sondern Bestandteil der Chipkarte.

Fig. 5 zeigt eine Schnittdarstellung eines Ausführungsbeispiels der erfindungsgemäßen Chipkarte mit dem in den Fig. 1 bis 4 dargestellten Chipmodul 1. Die Schnittebene ist dabei so gewählt, dass das Chipmodul 1 wiederum entlang der in Fig. 2 eingezeichneten Linie AA geschnitten wird. Die Chipkarte weist einen Kartenkörper 11 mit einer zweistufig ausgebildeten Aussparung 12 auf. In die Aussparung 12 ist das Chipmodul 1 eingeklebt, wobei die Verklebung zwischen dem Kartenkörper 11 und einem den Vergusskörper 6 umgebenden Bereich der Trägerfolie 5 ausgebildet ist. Die lateralen Abmessungen des Chipmoduls 1 sind deutlich kleiner als die lateralen Abmessungen des Kartenkörpers 11, der nur zum Teil dargestellt ist. Die Leiterbahnen 10 der Chipkarte sind im Bereich der Aussparung 12 für das Chipmodul 1 zugänglich. An die Leiterbahnen 10 sind nicht figürlich dargestellte elektrische Komponenten des Kartenkörpers 11, wie beispielsweise eine Antenne, eine Anzeigevorrichtung, eine Batterie usw. angeschlossen. Zur Ausbildung einer elektrisch leitenden Verbindung zwischen den Leiterbahnen 10 der Chipkarte und den jeweils zugehörigen Anschlüssen 8 des Chipmoduls 1 ist im Bereich des Anschlussfeldes 7 des Chipmoduls 1 auf den Kartenkörper 11 oder auf das Chipmodul 1 ein leitfähiger Kleber 13, insbesondere ein ACF-Kleber oder ein ACP-Kleber, aufgetragen. ACF steht für Anisotropic Conductive Film, ACP für Anisotropic Conductive Paste. Es handelt sich dabei jeweils um Kleber 13, die eine anisotrope Leitfähigkeit aufweisen. Wenn ein Kleber 13 mit einer anisotropen Leitfähigkeit verwendet wird, wird er so appliziert, dass die Leitfähigkeit innerhalb der Ebene des Kartenkörpers 11 erheblich geringer ist als senkrecht dazu. Dadurch ist es möglich, den Kleber 13 im Bereich des Anschlussfeldes 7 des Chipmoduls 1 vollflächig aufzutragen, ohne dadurch die Anschlüsse 8 kurzzuschließen. Es kann jedoch auch ein Kleber 13 mit einer isotropen Leitfähigkeit eingesetzt werden. In diesem Fall ist darauf zu achten, dass der Kleber 13 lediglich punktuell im Bereich der Anschlüsse 8 aufgetragen wird und sich die Klebepunkte verschiedener Anschlüsse 8 im Kartenkörper nicht berühren.

Alternativ dazu kann zur Herstellung elektrisch leitender Verbindungen zwischen den Leiterbahnen 10 der Chipkarte und den Anschlüssen 8 des Chipmoduls 1 beispielsweise auch die Flexible Bump Methode eingesetzt werden, bei der die Anschlüsse 8 des Chipmoduls 1 direkt an den Leiterbahnen 10 der Chipkarte anliegen und mit diesen verlötet oder verschweißt werden.

Durch die Anordnung des Anschlussfeldes 7 des Chipmoduls 1 in einem Abstand zum Vergusskörper 6 kann die mechanische Belastung des Anschlussfeldes 7, beispielsweise bei einer Biegebeanspruchung des Kartenkörpers 11, relativ gering gehalten werden, da eine räumliche Trennung vom versteifend wirkenden Vergusskörper 6 vorliegt.

In einer Abwandlung des dargestellten Ausführungsbeispiels ist es vorgesehen, dass wenigstens einige Anschlüsse 8 des Anschlussfeldes 7 von außerhalb der Chipkarte zugänglich sind. Dies kann beispielsweise dadurch erreicht werden, dass diese Anschlüsse 8 auf der Vorderseite des Chipmoduls 1 angeordnet werden. Die von außen zugänglichen Anschlüsse 8 können ähnlich wie das Kontaktfeld 2 von einer Kontaktiereinheit eines externen Geräts kontaktiert werden. Auf diese Weise kann beispielsweise eine im Kartenkörper 11 angeordnete Batterie aufgeladen werden. Ebenso ist es auch möglich, dass auf der Vorderseite des Chipmoduls 1 angeordnete Anschlüsse 8 als Sensortaster genutzt werden. Diese Anschlüsse 8 können mit Leiterbahnen 9 des Chipmoduls 1 oder mit Leiterbahnen 10 der Chipkarte verbunden sein und beispielsweise dazu dienen, Funktionen der Chipkarte zu schalten.

In einer weiteren Abwandlung weist das Anschlussfeld 7 zusätzlich oder alternativ zu den Anschlüssen 8 weitere Komponenten auf. Dies ist in Fig. 6 dargestellt.

Fig. 6 zeigt eine Aufsicht auf die Rückseite eines weiteren Ausführungsbeispiels des erfindungsgemäßen Chipmoduls 1. Bei diesem Ausführungsbeispiel sind die Leiterbahnen 9 des Chipmoduls 1 im Bereich des Anschlussfeldes 7 so angeordnet, dass sie eine Antenne 14 bilden.

Auf der Rückseite des Chipmoduls 1 können zusätzlich zur Antenne 14 Anschlüsse 8 vorhanden sein, die allerdings in Fig. 6 nicht dargestellt sind.

Ebenso ist es auch möglich, die Antenne 14 auf der Vorderseite des Chipmoduls 1 anzuordnen und die Rückseite des Chipmoduls 1 entsprechend Fig. 2 mit Anschlüssen 8 zu versehen. Auch eine Anordnung der Antenne 14 auf der Vorderseite und der Rückseite des Chipmoduls 1 ist denkbar. Die Antenne 14 kann mit zwei Kontaktflächen 3 des Kontaktfeldes 2 elektrisch leitend verbunden werden, wodurch auch eine elektrisch leitende Verbindung zum integrierten Schaltkreis ausgebildet wird. Weiterhin ist es möglich, im Bereich des Anschlussfeldes 7 auf der Vorderseite und/oder der Rückseite des Chipmoduls 1 nicht figürlich dargestellte kapazitive Flächen anzuordnen, mit denen beispielsweise die Resonanzfrequenz der Antenne 14 abgestimmt werden kann.

Ebenso können im Bereich des Anschlussfeldes 7 elektronische Bauteile, insbesondere in SMD-Technik, aufgebracht werden. Im Bereich des Anschlussfeldes kann eine ebenfalls nicht dargestellte Schalteinrichtung ausgebildet sein. Die Schalteinrichtung ist vorzugsweise aussenseitig, also auf der in Fig.1 erkennbaren Seite, angeordnet. Sie kann beispielsweise ein kapazitiver Taster oder Schalter oder aber ein induktiver Schaltkreis sein.

Der Erfindungsgedanke kann auf eine Anordnung einer Antenne auf einem Träger angewandt werden. Die Antenne ist dann in einem seitlichen Abstand zum integrierten Schaltkreis 4 auf dem Träger 5 angeordnet, ohne daß ein Anschlußfeld vorliegt. Die weiteren oben genannten erfindungsgemäßen Aspekte einer Anordnung eines Anschlussfeldes sind ebenso auf die Anordnung einer Antenne anwendbar.

Zusätzlich oder alternativ zu den bereits beschriebenen Varianten sind für das Chipmodul 1 eine Reihe von weiteren Abwandlungen und Weiterbildungen möglich. So können beim Chipmodul 1 beispielsweise auch mehrere Anschlussfelder 7 vorgesehen sein, insbesondere zwei Anschlussfelder 7 auf einander gegenüberliegenden Seiten des integrierten Schaltkreises 4. Das Chipmodul 1 kann auch bezüglich seines Grundaufbaus andersartig ausgebildet sein. Dabei können prinzipiell beliebige Standardverfahren der Chipmodulherstellung eingesetzt werden, beispielsweise die Lead Frame Technik, bei welcher der integrierte Schaltkreis 4 auf einem ausgestanzten Kontaktfeld 2 angeordnet wird, die Flip Chip Technik, bei welcher der integrierte Schaltkreis 4 mit seiner Kontaktseite auf der Trägerfolie 5 angeordnet wird usw.

Die erfindungsgemäße Chipkarte kann je nach Anwendungsbereich für eine Kommunikation über eine berührende Kontaktierung oder eine kontaktlose Kommunikation ausgelegt werden. Ebenso ist es auch möglich, dass die Chipkarte sowohl über eine berührende Kontaktierung als auch kontaktlos kommunizieren kann.

Ein tragbarer Datenträger im Sinne der vorliegenden Erfidnung ist insbesondere ein kartenförmiger Datenträger, beispielsweise eine Chipkarte oder ein SIM-Modul, ein Token, beispielsweise ein USB-Token, oder auch ein Schlüsselanhänger.

## Patentansprüche

1. Chipmodul für einem tragbaren Datenträger, mit einem integrierten Schaltkreis (4), der auf einem Träger (5) angeordnet ist, **dadurch gekennzeichnet, dass** auf dem Träger (5) in einem seitlichen Abstand zum integrierten Schaltkreis (4) ein Anschlussfeld (7) mit mehreren Anschlüssen (8) zum Anschließen wenigstens einer elektrischen Komponente ausgebildet ist, wobei das Anschlussfeld (7) außerhalb eines Bereichs der Trägerfolie (5), der den Vergusskörper umgibt, angeordnet ist, und wobei der Bereich der Trägerfolie (5), der den Vergusskörper umgibt, den integrierten Schaltkreis (4) oder einen Vergusskörper (6), in den der integrierten Schaltkreis (4) eingebettet ist, umgibt.

2. Chipmodul nach einem der vorhergehenden Ansprüche, **dadurch gekennzeichnet, dass** wenigstens einige der Anschlüsse (8) mit dem integrierten Schaltkreis (4) elektrisch leitend verbunden sind.

3. Chipmodul nach einem der vorhergehenden Ansprüche, **dadurch gekennzeichnet, dass** wenigstens einige der Anschlüsse (8) auf derselben Hauptfläche des Trägers (5) angeordnet sind, auf der auch der integrierte Schaltkreis (4) angeordnet ist.

4. Chipmodul nach einem der vorhergehenden Ansprüche, **dadurch gekennzeichnet, dass** im Bereich des Anschlussfeldes (7) wenigstens ein kapazitives und/oder wenigstens ein induktives Element (14) ausgebildet ist.

5. Chipmodul nach einem der vorhergehenden Ansprüche, **dadurch gekennzeichnet, dass** im Bereich des Anschlussfeldes (7) wenigstens eine Schalteinrichtung ausgebildet ist.

6. Chipmodul nach einem der vorhergehenden Ansprüche, **dadurch gekennzeichnet, dass** im Bereich des Anschlussfeldes (7) wenigstens ein elektronisches Bauteil, vorzugsweise in SMD-Technik, angeordnet ist.

7. Chipmodul nach einem der vorhergehenden Ansprüche, **dadurch gekennzeichnet, dass** der integrierte Schaltkreis (4) mit einem standardisierten Kontaktfeld (2) für eine externe Kontaktierung elektrisch leitend verbunden ist.

8. Chipmodul nach Anspruch 7, **dadurch gekennzeichnet, dass** das Anschlussfeld (7) seitlich versetzt zum Kontaktfeld (2) für die externe Kontaktierung angeordnet ist.

9. Tragbarer Datenträger mit einem Kartenkörper (11), der wenigstens eine elektrische Komponente aufweist, und einem Chipmodul (1) nach Anspruch 1, **dadurch gekennzeichnet, dass** die elektrisch leitende Verbindung zwischen dem Chipmodul (1) und der elektrischen Komponente des Kartenkörpers (11) mittels eines Anschlussfeldes (7) des Chipmoduls (1) realisiert ist, das in einem seitlichen Abstand zum integrierten Schaltkreis (4) auf dem Träger (5) ausgebildet ist und mehrere Anschlüsse (8) aufweist.

10. Tragbarer Datenträger nach Anspruch 9, **dadurch gekennzeichnet, dass** wenigstens einige Anschlüsse (8) des Anschlussfeldes (7) mittels eines elektrisch leitenden Klebers (13), der vorzugsweise eine anisotrope Leitfähigkeit aufweist, elektrisch leitend mit dafür vorgesehenen Strukturen (10) des Kartenkörpers (11) verbunden sind.

11. Tragbarer Datenträger nach einem der Ansprüche 9 oder 10, **dadurch gekennzeichnet, dass** wenigstens ein Anschluss (8) des Anschlussfeldes (7) außerhalb des Kartenkörpers (11) zugänglich ist.

12. Tragbarer Datenträger nach einem der Ansprüche 9 bis 11, **dadurch gekennzeichnet, dass** die lateralen Abmessungen des Chipmoduls (1) kleiner sind als die lateralen Abmessungen des Kartenkörpers (11).

13. Tragbarer Datenträger nach einem der Ansprüche 9 bis 12, **dadurch gekennzeichnet, dass** das Chipmoduls (1) in einer vorzugsweise zweistufig ausgebildeten Aussparung (12) des Kartenkörpers (11) angeordnet ist, die zur Umgebung hin offen ist.

## Claims

1. A chip module for a portable data carrier, having an integrated circuit (4) arranged on a carrier (5) **characterized in that** on the carrier (5) there is configured at a lateral distance to the integrated circuit (4) a connector pad (7) with several connectors (8) for connecting at least one electric component, wherein the connector pad (7) is arranged outside a region of the carrier foil (5) surrounding the cast body, and wherein the region of the carrier foil (5) surrounding the cast body surrounds the integrated circuit (4) or a cast body (6) in which the integrated circuit (4) is embedded.

2. The chip module according to any of the preceding claims, **characterized in that** at least some of the connectors (8) are connected electroconductively with the integrated circuit (4).

3. The chip module according to any of the preceding claims, **characterized in that** at least some of the connectors (8) are arranged on the same main area of the carrier (5) on which also the integrated circuit (4) is arranged.

4. The chip module according to any of the preceding claims, **characterized in that** in the region of the connector pad (7) at least one capacitive and/ or at least one inductive element (14) is configured.

5. The chip module according to any of the preceding claims, **characterized in that** in the region of the connector pad (7) at least one switching device is configured.

6. The chip module according to any of the preceding claims, **characterized in that** in the region of the connector pad (7) at least one electronic component, preferably in SMD technology, is arranged.

7. The chip module according to any of the preceding claims, **characterized in that** the integrated circuit (4) is connected electroconductively with a standardized contact pad (2) for external contacting.

8. The chip module according to claim 7, **characterized in that** the connector pad (7) is arranged laterally offset from the contact pad (2) for the external contacting.

9. A portable data carrier with a card body (11) having at least one electric component, and a chip module (1) according to claim 1, **characterized in that** the electroconductive connection between the chip module (1) and the electric component of the card body (11) is realized by means of a connector pad (7) of the chip module (1) that is configured on the carrier (5) at a lateral distance to the integrated circuit (4) and has several connectors (8).

10. The portable data carrier according to claim 9, **characterized in that** at least some connectors (8) of the connector pad (7) are connected electroconductively with structures (10) of the card body (11) provided for this purpose by means of an electroconductive adhesive (13) preferably having an anisotropic conductivity.

11. The portable data carrier according to any of the claims 9 or 10, **characterized in that** at least one connector (8) of the connector pad (7) is accessible outside the card body (11).

12. The portable data carrier according to any of the claims 9 to 11, **characterized in that** the lateral dimensions of the chip module (1) are smaller than the lateral dimensions of the card body (11).

13. The portable data carrier according to any of the claims 9 to 12, **characterized in that** the chip module (1) is arranged in a recess (12) of the card body (11), said recess being preferably of a two-step configuration and being open towards the surroundings.

## Revendications

1. Module de puce destiné à support de données portable, comprenant un circuit intégré (4) qui est agencé sur un support (5), **caractérisé en ce qu'**une plage de connexion (7) à plusieurs bornes (8) pour la connexion d'au moins un composant électrique est réalisée sur le support (5) à un espacement latéral du circuit intégré (4), la plage de connexion (7) étant agencée à l'extérieur d'une zone de la feuille support (5) qui entoure le corps moulé, et la zone de la feuille support (5) qui entoure le corps moulé entourant le circuit intégré (4) ou un corps moulé (6) dans lequel le circuit intégré (4) est noyé.

2. Module de puce selon une des revendications précédentes, **caractérisé en ce qu'**au moins quelques unes des bornes (8) sont connectées de manière électroconductrice avec le circuit intégré (4).

3. Module de puce selon une des revendications précédentes, **caractérisé en ce qu'**au moins quelques unes des bornes (8) sont agencées sur la même face principale du support (5) sur laquelle est aussi agencé le circuit intégré (4).

4. Module de puce selon une des revendications précédentes, **caractérisé en ce que**, dans la zone de la plage de connexion (7), au moins une élément capacitif et/ou au moins une élément inductif (14) est réalisé.

5. Module de puce selon une des revendications précédentes, **caractérisé en ce que**, dans la zone de la plage de connexion (7), au moins un dispositif de commutation est réalisé.

6. Module de puce selon une des revendications précédentes, **caractérisé en ce que**, dans la zone de la plage de connexion (7), au moins un composant électronique, de préférence en technique SMD, est agencé.

7. Module de puce selon une des revendications précédentes, **caractérisé en ce que** le circuit intégré (4) est, pour une mise en contact externe, connecté de manière électroconductrice avec un champ de contact (2) standardisé.

8. Module de puce selon la revendication 7, **caractérisé en ce que** la plage de connexion (7) est, pour la mise en contact externe, agencée de manière latéralement décalée par rapport au champ de contact (2).

9. Support de données portable comprenant un corps de carte (11) qui comporte au moins un composant électronique, et un module de puce (1) selon la revendication 1, **caractérisé en ce que** la connexion électroconductrice est réalisée entre le module de puce (1) et le composant électronique du corps de carte (11) au moyen d'une plage de connexion (7) du module de puce (1) qui est réalisée sur le support (5) à un espacement latéral du circuit intégré (4) et comporte plusieurs bornes (8).

10. Support de données portable selon la revendication 9, **caractérisé en ce qu'**au moins quelques bornes (8) de la plage de connexion (7) sont connectées, de manière électroconductrice au moyen d'une colle (13) électroconductrice présentant de préférence une conductivité anisotrope, avec des structures (10) du corps de carte (11) prévues à cet effet.

11. Support de données portable selon une des revendications de 9 à 10, **caractérisé en ce qu'**au moins une borne (8) de la plage de connexion (7) est accessible à l'extérieur du corps de carte (11).

12. Support de données portable selon une des revendications de 9 à 11, **caractérisé en ce que** les dimensions latérales du module de puce (1) sont inférieures aux dimensions latérales du corps de carte (11).

13. Support de données portable selon une des revendications de 9 à 12, **caractérisé en ce que** le module de puce (1) est agencé dans un évidement (12) du corps de carte (11), lequel évidement est de préférence à deux niveaux et est ouvert vers le milieu extérieur.
